**Europäisches Patentamt**

**European Patent Office**

**Office européen des brevets**

(11) Veröffentlichungsnummer: **0 369 327**

**A1**

# EUROPÄISCHE PATENTANMELDUNG

(21) Anmeldenummer: **89120802.7**

(22) Anmeldetag: **09.11.89**

(51) Int. Cl.⁵: **F16B 29/00**

(30) Priorität: **10.11.88 DE 3838118**

(43) Veröffentlichungstag der Anmeldung:
**23.05.90 Patentblatt 90/21**

(84) Benannte Vertragsstaaten:
**BE DE ES FR GB IT LU NL SE**

(71) Anmelder: **Böllhoff & Co, GmbH & Co KG**
**Archimedesstrasse 1-4**
**D-4800 Bielefeld 14(DE)**

(72) Erfinder: **Kobusch, Klaus**
**Torfstichweg 8**
**D-4800 Bielefeld 1(DE)**

(74) Vertreter: **Hauck, Hans, Dipl.-Ing. et al**
**Mozartstrasse 23**
**D-8000 München 2(DE)**

(54) **Befestigungselement zum Verankern an einem flächigen Werkstück.**

(57) Die Erfindung betrifft eine Aufweitmutter, deren Gewinde (8) nach dem Einstecken einer polygonalen (3) einer glatten Innenbohrung (6) versehenen Buchse in eine entsprechend polygonale Öffnung eines Bleches (4) geformt wird, wobei sich beim Einformen des Gewindes (8) die Mutter radial nach außen verformt und in der Öffnung verankert wird.

EP 0 369 327 A1

## Befestigungselement zum Verankern an einem flächigen Werkstück

Die Erfindung betrifft ein Befestigungselement zum Verankern an einem flächigen Werkstück gemäß dem Oberbegriff des Patentanspruchs 1.

Zum Befestigen an Flächen, wie Tafeln und Blechen, dienen bekannte Blindnietmuttern. Diese weisen zwischen dem eigentlichen Gewindeteil und dem Kragen zum Aufsetzen auf die Fläche einen Stauchhals auf, der durch den in den Gewindeteil eingesetzten Zugdorn zu einem das Werkstück hintergreifenden Wulst ausgeformt wird. Die Mutter ist so zwischen der Wulst und dem Kragen an dem Werkstück gehalten. Die axiale Länge solcher Blindnietmuttern ist verhältnismäßig groß, da der Gewindeteil an den gewindelosen Kragen und Wulst anschließt.

Die der Erfindung zugrundeliegende Aufgabe besteht darin, ein Befestigungselement zu schaffen, das ähnlich einer Blindnietmutter in die Öffnung eines flächigen Werkstücks eingesetzt und darin durch ein Werkzeug verankert wird, wobei jedoch das Element eine kurze Baulänge aufweisen soll.

Die genannte Aufgabe ist erfindungsgemäß durch die Merkmale des Patentanspruchs 1 gelöst.

Das erfindungsgemäße Befestigungselement ist demnach eine gewindelose Buchse mit Kragen, die nach dem Einstecken in die Öffnung mittels des gewindeformenden Werkzeuges oder einer selbstfurchenden Schraube radial aufgeweitet und in dem Werkstück verankert wird. Beim Gewindeformen wird Material der Buchse radial nach außen verdrängt, so daß einerseits die Außenfläche der Mutter satt an das Werkstück angelegt und andererseits der das Werkstück überragende Mutternteil das Werkstück hintergreifend verformt wird. Die Mutter kann an einseitig zugänglichen Bauteilen montiert werden.

Das Maß des radialen Aufweitens ist natürlich von der Wandstärke der Buchse abhängig. Ist die Wandstärke zu groß, wenn der Innendurchmesser der Buchse gegenüber dem Außendurchmesser verhältnismäßig klein ist, so wird das radiale Aufweiten dadurch erleichtert, daß die Buchse mit mehreren Schlitzen versehen wird. Die dadurch entstehenden Sektoren sind verhältnismäßig leicht verformbar.

Bei Gewindeeinsätzen für Bohrungen ist es bekannt (US-PS 3 566 947), zur Gewindeerneuerung in eine Gewindebohrung des Werkstückes eine dünnwandige Stahlbuchse mit synchron verlaufenden äußeren und inneren Gewindegängen einzuschrauben. Die Stahlbuchse ist selbstsichernd, indem ein Teil der inneren Gewindegänge nicht voll ausgebildet ist, die beim Eindrehen selbstsichernd in das Basismaterial des Werkstückes eingepreßt werden. Solche Gewindeeinsätze eignen sich nicht zur Verankerung in flächigen Werkstücken.

Vorteilhafte Weiterbildungen der Erfindung sind in den Unteransprüchen gekennzeichnet.

Die Erfindung ist nachstehend anhand der Zeichnung näher erläutert. Es zeigt:

Figur 1 eine Aufweitmutter in Draufsicht,

Figur 2 die Aufweitmutter im Schnitt vor dem Einbau und

Figur 3 die Aufweitmutter im Schnitt nach dem Einbau,

Figur 4 eine Draufsicht auf eine abgeänderte Aufweitmutter,

Figur 5 eine Seitenansicht,

Figur 6 einen Schnitt der Aufweitmutter vor dem Einbau.

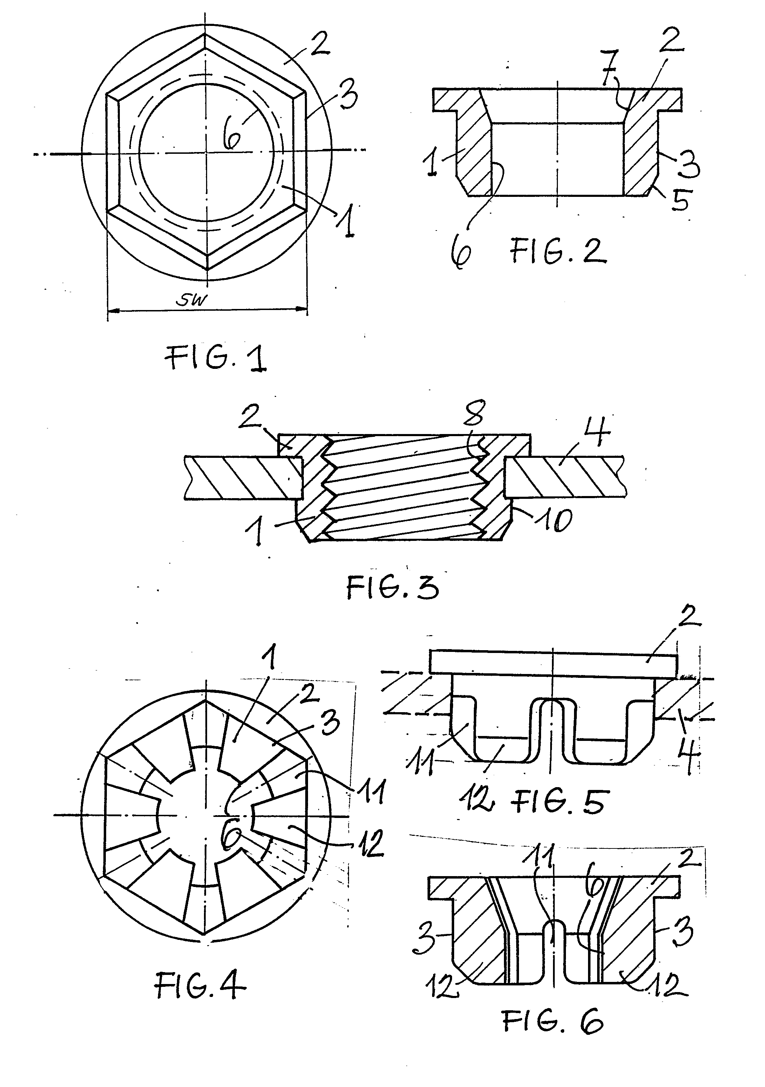

Wie aus den Figuren 1 und 2 ersichtlich, besteht die Aufweitmutter aus einer Buchse 1, vorzugsweise aus duktilem Stahl, die einen angeformten ringförmigen Kragen 2 aufweist und deren Außenfläche 3 hexagonal ausgebildet ist. Zum leichteren Einstecken in eine ebenfalls hexagonal gestanzte Öffnung in einer Tafel 4 ist das dem Kragen 2 gegenüberliegende Ende der Buchse 1 bei 5 angeschrägt.

Die Buchse 1 ist mit einer inneren Bohrung 6 versehen, deren Anfang 7 am Kragen 2 ebenfalls angeschrägt ist, um das Einsetzen des Formwerkzeuges zu erleichtern.

Nach dem Einstecken in die Öffnung der Tafel 4 wird ein gewindeformendes Werkzeug oder eine selbstfurchende Schraube von oben her in die Buchse 1 eingeschraubt und dabei die aus Figur 3 ersichtlichen Gewindegänge 8 ausgeformt. Beim Einformen des Gewindes wird Material der Buchse radial nach außen verdrängt. Der im Bereich der polygonalen Öffnung im Werkstück 4 liegende Abschnitt wird dabei an die Öffnung angepreßt, während der über die Öffnung überstehende Teil der Buchse, der etwa gleich der Hälfte der Tafelstärke ist, ebenfalls radial aufgeweitet wird und sich dabei so verformt, daß er die Tafel 4 hintergreift. Der hintergreifende Abschnitt 10 sichert die Aufweitmutter in Auszugsrichtung, während die Drehsicherung durch den Sechskant 3 erfolgt.

In den Figuren 4 bis 6 ist eine abgeänderte Ausführungsform dargestellt, die dann verwendet wird, wenn der Durchmesser der Innenbohrung 6 verhältnismäßig gering gegenüber der Schlüsselweite des Sechskants 3 ist. Dann ist nämlich die Wandstärke der Buchse so groß, daß das radiale Aufweiten erschwert ist.

Es wird deshalb die Buchse 1 mit radialen Schlitzen 11 versehen, zwischen denen die Segmente 12 stehen bleiben. Die Tiefe der Schlitze 11 ist gemäß Figur 5 so gewählt, daß die Schlitze noch teilweise in der Öffnung des Werkstückes 4 zu liegen kommen. Vorzugsweise werden diese Buchsen im Druckgußverfahren hergestellt.

Die Befestigung erfolgt in der bereits erläuterten Weise, indem nach dem Einstecken der Buchse ein gewindeformendes Werkzeug oder Schraube die Abschnitte 12 radial aufweitet, so daß die Buchse an die Seitenwände der Öffnung angepreßt wird, während der überstehende Abschnitt die Öffnung hintergreift.

### Ansprüche

1. Befestigungselement zum Verankern an einem flächigen Werkstück, **gekennzeichnet** durch
- die Außenfläche (3) einer Buchse ist polygonal,
- am einen Ende der Buchse ist ein Flansch (2) angeformt,
- die Länge der Buchse ist größer als die Länge der Öffnung, in die die Buchse bis zum Aufsetzen des Flansches (2) auf der Fläche (4) einsteckbar ist,
- die Form der Öffnung im Werkstück entspricht der polygonalen Außenfläche (3),
- die Buchse weist eine zylindrische Innenbohrung (6) auf,
- Eindrehen eines gewindeformenden Werkzeuges oder Schraube mit einschneidender und Material verdrängender Wirkung wird das Muttergewinde gebildet und die Mutter radial aufgeweitet, wobei die Mutter im Bereich der Öffnung an das Werkstück angelegt und außerhalb der Öffnung diese hintergreifend aufgeweitet wird.

2. Befestigungselement nach Anspruch 1, dadurch **gekennzeichnet,** daß bei einem im Vergleich zur Öffnung kleinem Bohrungsdurchmesser (6) die Buchse im Bereich der polygonalen Außenfläche radiale Schlitze (11) aufweist.

3. Befestigungselement nach Anspruch 1 oder 2, dadurch **gekennzeichnet,** daß die axiale Länge der Mutter etwa zweimal so lang wie die Länge der Öffnung im Werkstück ist.

4. Befestigungselement nach einem der Ansprüche 1 bis 3, dadurch **gekennzeichnet,** daß die Außenfläche (3) der Buchse hexagonal ist.

5. Befestigungselement nach einem der Ansprüche 1 bis 4, dadurch gekennzeichnet, daß der sich aufweitende Teil geschlitzt ist.

EP 0 369 327 A1

FIG. 1

FIG. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 094 738 (VEREINIGTE DEUTSCHE METALLWERKE)<br>* Insgesamt *<br>--- | 1-5 | F 16 B 29/00 |
| X | US-A-3 756 116 (J.T. SCHUPLIN)<br>* Spalte 2, Zeile 33 - Spalte 3, Zeile 54; Figuren 1-8 *<br>--- | 1 | |
| X | FR-A-2 457 994 (RAPID SA)<br>* Seite 3, Zeile 17 - Seite 6, Zeile 24; Figuren 1-6 *<br>--- | 1-4 | |
| A | US-A-3 326 260 (A. TUCKER)<br>* Spalte 1, Zeile 37 - Spalte 3, Zeile 37; Figuren 1-4 *<br>--- | 1,4 | |
| D,A | US-A-3 566 947 (J.A. JUKES)<br>----- | | |

RECHERCHIERTE SACHGEBIETE (Int. Cl.5)

F 16 B

Der vorliegende Recherchenbericht wurde für alle Patentansprüche erstellt

| Recherchenort | Abschlußdatum der Recherche | Prüfer |
|---|---|---|
| DEN HAAG | 14-02-1990 | ARESO Y SALINAS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)